# EUROPÄISCHE PATENTSCHRIFT

(11) **EP 1 946 720 B1**
(45) Veröffentlichungstag und Bekanntmachung des Hinweises auf die Patenterteilung: **09.03.2011**
(21) Anmeldenummer: 07100717.3
(22) Anmeldetag: 18.01.2007
(51) Int. Cl.: A61C 8/00

(54) **Abformkappe**
Impression cap
Cupule d'empreinte

(43) Veröffentlichungstag der Anmeldung: 23.07.2008
(73) Patentinhaber: Straumann Holding AG, 4002 Basel (CH)
(72) Erfinder: Schaub, Jörg, 79541 Lörrach-Brombach (DE)
(74) Vertreter: Modiano, Micaela Nadia

(56) Entgegenhaltungen:
- WO-A-02/17814
- WO-A-96/29019
- US-A1- 2006 228 672
- US-B1- 6 332 777

## Beschreibung

Die vorliegende Erfindung betrifft allgemein eine zweiteilige Abformkappe für die Herstellung eines Modells für Implantate, im Besonderen für Dentalimplantate, das einfach und kostengünstig hergestellt werden kann und flexibel in der Anwendung ist.

### Stand der Technik

Zur Herstellung eines Abdrucks der oralen Gegebenheiten im Zahnbereich sind Abformkappen in der Zahnmedizin vielfältig bekannt geworden. Diese werden im Verfahren zur Erstellung einer Zahnprothese verwendet, wobei mithilfe dieser Abformkappen ein naturgetreues und der Position und Richtung angepasstes Abbild der Zahnstellung eines Patienten möglich ist.

Dentalimplantate dienen dazu, verlorene, beschädigte oder unästhetische Zähne zu ersetzen. Diese werden mit einer künstlichen Zahnprothese ersetzt, um so die Biss- und Kaufähigkeit oder die Ästhetik im Mundraum des Patienten wiederherzustellen.

Zur Erstellung einer solchen Zahnprothese wird beim Zahnarzt zuerst ein Dentalimplantat in den Kieferknochen eingesetzt. Nach erfolgreicher Einheilung des Implantats im Kieferknochen wird dann entweder ein Abutment oder ein anderer geeigneter Aufsatz, im nachfolgenden vereinfachend Technikeradapter genannt, provisorisch auf das Implantat aufgesetzt, um eine Abformkappe darauf zu befestigen, die die Richtung und Position auf ein später herzustellendes Zahnmodell auf das Abformmodell überträgt. Daran anschliessend wird die Abformkappe auf das Implantat mit darauf befindlichem Abutment oder Technikeradapter aufgesetzt und mit einer meist aus einer schnellbindenden Abformmasse (z.B. Elastomere, Silikon) ausgefüllten Form am Kiefer des Patienten angepresst, um so eine naturgetreue und geometrisch korrekte Abbildung der Zahnstellung des Patienten zu erhalten.

Die Abformkappe verbleibt bei diesem Vorgang in der Kunststoffmasse und wird nach der Abbindezeit des Kunststoffs zusammen mit der Form vom Kiefer abgezogen. Das so erstellte Kunststoffmodell dient im zahntechnischen Labor zur exakten Nachbildung der Gegebenheiten im Kiefer und zur Erstellung eines individuellen Zahnmodells. Diese Übertragung der räumlichen Gegebenheiten des Kiefers auf ein Zahntechnikermodell erweist sich jedoch als äußerst schwierig, im Besonderen, wenn der Zahnersatz im sichtbaren Bereich liegt, z.B. im Bereich der Frontzähne, wo es auf ästhetische Gesichtpunkte ankommt. Geringe Abweichungen der Geometrie, die z.B. durch Verwackelung während des Abbindevorgangs beim Abformen beim Zahnarzt entstehen können, wirken sich nachteilig auf die zu erstellende Zahntechnikerform und somit auch negativ auf den künstlichen Zahnersatz aus. Die vom Zahnarzt erstellte Abformung wird dem Zahntechniker als Basis für die Herstellung eines Gipsmodells des Kieferknochens übergeben. Im Labor setzt der Zahntechniker auf das Abformmodell mit der darin befindlichen Abformkappe ein provisorisches Implantat, im folgenden Technikerimplantat genannt, mit einem geeigneten aufgesetzten Abutment oder Technikeradapter ein, das zur Nachbildung des im Kiefer eingesetzten Implantats und des darauf zu modellierenden Zahnersatzes geeignet ist. Auf diese Weise sitzt das Technikerimplantat in der gleichen Stellung in dem Abformmodell wie das beim Patienten im Kieferknochen eingesetzte Implantat. Die geometrischen Verhältnisse im Kiefer des Patienten können auf diese Weise sehr genau nachgebildet werden. Daraufhin wird mit Hilfe einer Gipsmasse die Abformung mit der darin eingeschlossenen Abformkappe und der darauf aufgesetzten Kombination aus Technikerimplantat und Abutment ausgegossen. Nach erfolgreicher Aushärtung der Gipsmasse wird die Kunststoff-Abformmaske entfernt und ein vollständiges Gipsmodell des Kiefers des Patienten mit dem eingegossenen Technikerimplantat ist zur weiteren Zahnersatzherstellung bereitgestellt.

Abformkappen sind in verschiedenen Ausführungen bekannt, die je nach Aufgabe des zu erstellenden Zahnmodells unterschiedliche Ausführungen und Formen haben. So sind Abformkappen bekannt, die der Form des Abutment angepasst sind, was jedoch nachteilig dazu führt, dass eine grosse Anzahl von Abformkappen für unterschiedliche Ausführungsgeometrien des okklusalen Teils eines Abutments beim Zahnarzt vorrätig sein muss, um die genaue Anpassung an das Abutment zu gewährleisten, da es bei zu grossem Spiel zwischen der Innenfläche der Abformkappe und der Aussenfläche des okklusalen Teils des Abutments zu Verschiebungen der Abformkappe kommen kann.

Auch sind unterschiedlich zu befestigende Abformkappen bekannt, z.B. verschraubte oder mittels einer Klemmvorrichtung aufgesteckte Abformkappen. Klemmbare Abformkappen besitzen meist eine an der dem Implantat zugewandten Seite flexible Abschnitte, die sich am Dentalimplantat festklemmen können, jedoch sind sie gegen Verdrehungen nur unzureichend stabilisiert, da die Klemmung nur am Kragenbezeich des Abutments wirkt und daher rutschen sie leicht im Bereich der Klemmverbindung ab. Eine derartige Abformkappe ist z.B. aus der EP 0 680 732 B1 bekannt.

Weiterhin ist aus der US 6 382 977 B1 eine Abformkappe bekannt, die mit flexiblen dünnwandigen Abschnitten am proximalen Ende ausgestattet ist, die im Inneren des Implantats schnappend eingreifen. Das proximale Ende der Abformkappe weist auch eine Ausrichtungsaussparung oder eine Ausrichtungsnabe auf, um eine bestimmte Position im Inneren des Implantats einzunehmen.

Bei der Fertigung solcher Abformkappen hat sich in der Praxis herausgestellt, dass die Herstellung einer Abformkappe mit den daran angeformten flexiblen zur Klemmung oder zum Schnappen vorgesehenen Abschnitten, die am Implantat verklemmt oder geschnappt werden sollen, beim Spritzguss erhebliche Probleme bereitet, da diese sehr präzise hergestellt werden müssen. Durch die geforderte Präzision sind diese Spritzgussmodellformen kostenintensiv in der Herstellung und außerdem hat sich gezeigt, dass sich die Herstellung dieser dünnwandigen Strukturen als äusserst schwierig erweist.

Aus den Figuren 34 bis 37 der US 6 332 777 B1 ist eine zweiteilige Abformkappe für die Erstellung eines Modells für ein Dentalimplantat, die folgendes umfasst: ein zylindrisches Rumpfteil, und ein auf das zylindrische Rumpfteil aufsteckbares kappenförmiges Teil, wobei das zylindrische Rumpfteil und das kappenförmige Teil eine gemeinsame Mittelachse haben, wobei das kappenförmige Teil mit sich in Richtung der Mittelachse erstreckenden elastischen Mitteln ausgestattet ist, die ausgebildet sind, um zur Mittelachse hin abgebogen zu werden und somit eine Spannung in den elastischen Mitteln erzeugen, um in ein Gewinde im inneren eines Abutments reibschlüssig aufgenommen zu werden, und wobei das zylindrische Rumpftei ausgebildet ist, um eng am Äußeren des Abutments anzuliegen.

### Zusammenfassung der Erfindung

Der vorliegenden Erfindung liegt daher die Aufgabe zugrunde, eine Abformkappe für die Modellherstellung eines Dentalimplantats bereitzustellen, das die oben angeführten Probleme vermeidet.

Im Rahmen dieser Aufgabe besteht eine besondere Aufgabe der vorliegenden .. Erfindung darin, eine Abformkappe für die Modellherstellung eines Dentalimplantats zu realisieren, das erheblich leichter und kostengünstiger herstellbar ist.

Darüber hinaus besteht eine besondere Aufgabe der vorliegenden Erfindung darin, einer Abformkappe für die Modellherstellung eines Dentalimplantats eine Vielzahl von unterschiedlichen Kombinationsmöglichkeiten des zylindrischen Rumpfteils und des kappenförmigen Teils zu ermöglichen.

Des Weiteren ist es eine Aufgabe der vorliegenden Erfindung eine Abformkappe zu realisieren, die einfach zu handhaben ist.

Die obigen Aufgaben und weitere der nachfolgenden Beschreibung zu entnehmenden Aufgaben werden durch eine Abformkappe gemäß Anspruch 1 erfüllt. Vorteilhafte Weiterbildungen der gegenwärtigen Erfindung sind Gegenstand der Unteransprüche.

### Kurzbeschreibung der Figuren

Weitere Merkmale und Vorteile der vorliegenden Erfindung sowie die Wirkungsweise der exemplarischen Ausführungsform der vorliegenden Erfindung werden unten mit Bezug auf die begleitenden Zeichnungen beschrieben. Die begleitenden Zeichnungen veranschaulichen die vorliegende Erfindung und dienen zusammen mit der Beschreibung weiterhin dazu, die Grundsätze der Erfindung zu erklären und es einem Fachmann auf dem betreffenden Gebiet zu ermöglichen, die Erfindung herzustellen und zu verwenden.

Dabei zeigen:
Fig. 1A eine Seitenansicht einer zweiteiligen Abformkappe gemäß einer bevorzugten Ausführungsform der Erfindung;
Fig. 1B eine Seitenansicht der zweiteiligen Abformkappe der Fig. 1A im Vollschnitt;
Fig. 1C eine Draufsicht der zweiteiligen Abformkappe der Fig. 1 A;
Fig. 1D eine Unteransicht der zweiteiligen Abformkappe der Fig. 1A;
Fig. 2A eine Seitenansicht eines zylindrischen Rumpfteils der zweiteiligen Abformkappe der Fig. 1 A;
Fig. 2B eine Draufsicht des zylindrischen Rumpfteils der Fig. 2A;
Fig. 3A zeigt eine Seitenansicht des kappenförmigen Teils der zweiteiligen Abformkappe der Fig. 1 A;
Fig. 3B zeigt eine Draufsicht des kappenförmigen Teils der Fig. 3A;
Fig. 3C zeigt eine Unteransicht des kappenförmigen Teils der Fig. 3A;
Fig. 4 zeigt eine Seitenansicht der auf ein Abutment aufgesetzten erfindungsgemäßen zweiteiligen Abformkappe im Halbschnitt;

Beschreibung der bevorzugten Ausführungsformen der Erfindung

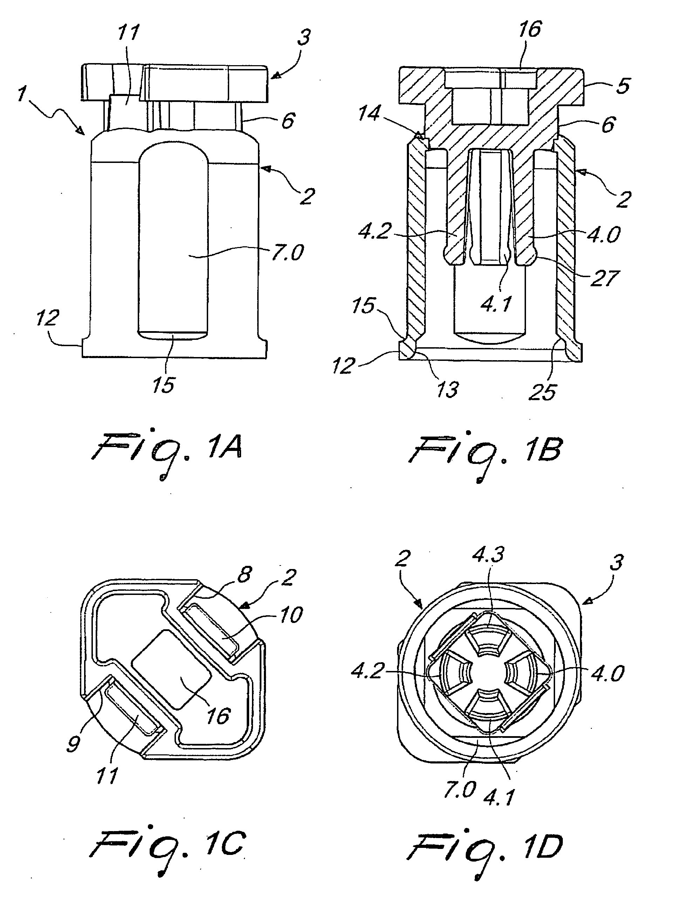

Unter Bezugnahme auf die Figuren 1A bis 4 wird eine bevorzugte Ausführungsform einer Abformkappe beschrieben. Die mit Bezugszeichen 1 bezeichnete Abformkappe 1 für die Erstellung eines Modells für ein Dentalimplantat umfasst ein zylindrisches Rumpfteil 2 und ein auf das zylindrische Rumpfteil 2 aufsteckbares kappenförmiges Teil 3, wobei das aufsteckbare kappenförmige Teil 3 mit einer Vielzahl von in den Innenbereich des zylindrischen Rumpfteils 2 eingreifenden Fingern 4.0, 4.1, 4.2, 4.3 (im Folgenden zur Vereinfachung mit dem Bezugszeichen 4 gekennzeichnet und auch als elastische Mittel bezeichnet) ausgestattet ist.

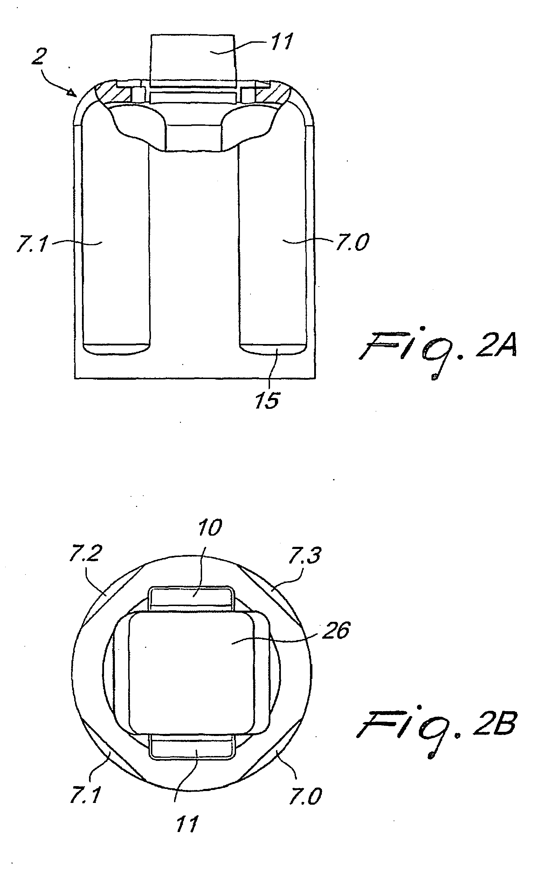

Das obere kappenförmige Teil 3 ragt im montierten Zustand in das untere zylindrische Rumpfteil 2 durch eine quadratische Öffnung 26, siehe Fig. 2B, in das zylindrische Rumpfteil 3 hinein. Das kappenförmige Teil 3 besitzt einen Stegbereich 6, an dem sich in montiertem Zustand Erhebungen 10, 11 des zylindrischen Rumpfteils 2 erstrecken. Der Stegbereich 6 liegt im montierten Zustand an seiner unteren Seite an einem stufenförmigen Bereich 14 des zylindrischen Rumpfteils 2 an. Der stufenförmige Bereich 14 kann zur besseren Stabilisierung beim Montieren vorteilhaft mit Klebemittel versehen werden um der zweiteiligen Abformkappe 1 mehr Stabilität zu verleihen.

Vom Stegbereich 6 nach unten abgehend, erstrecken sich in axialer Richtung die Finger 4, die ungefähr zu 60% der axialen Erstreckung des zylindrischen Rumpfteils 2 in das hohle Innere des zylindrischen Rumpfteils 2 hineinragen. Die Vielzahl von Fingern 4 sind aus einem elastischen Material gefertigt und verjüngen sich im Durchmesser zum Ende hin.

Diese Ausführungsform der Finger 4 erlaubt ein gutes Biegeverhalten bei gleichzeitiger Stabilität. Auch ermöglicht diese Ausführungsform eine einfache Herstellung der Spritzgussform, da keine extrem feinen Strukturen spritzgegossen werden müssen. Die Finger 4 sind symmetrisch in gleichen Abständen um die Mittelachse mit gleichen Abständen zueinander angeordnet.

Das den Bereich der Finger 4 umschliessende, zylindrische Rumpfteil 2 ist in vorteilhafter Weise im proximalen Bereich auf der Aussenfläche mit einer Vielzahl von revolvertrommel-ähnlichen Einfräsungen 7.0 bis 7.3 (im Folgenden zur Vereinfachung mit dem Bezugszeichen 7 gekennzeichnet) versehen, um so einen Widerstand gegen Verdrehen oder Verrutschen bei der Abformung in der zähen Abformmasse, wie z.B. Polymere, Hartgips, während des Abformvorgangs im Mund des Patienten zu erreichen. An der unteren Seite der Einfräsung 7 befindet sich ein schmaler halbkreisförmiger Absatz 15, der anschliessend in einen zylindrischen Bereich 12 übergeht.

In einer vorteilhaften Ausführungsform der Erfindung sind die Vielzahl von Einfräsungen 7 vorteilhaft symmetrisch an der Aussenoberfläche des zylinderförmigen Rumpfteils 2 radial angeordnet. Diese Einfräsungen 7 verlaufen in gleichen Abständen parallel der Längsachse und sind am halbkreisförmigen Absatz 15 gewölbt, bevor sie in die Oberfläche des zylindrischen Bereichs 12 übergehen. Auf der entgegengesetzten Seite des zylindrischen Bereichs 12 befindet sich an der Innenseite des zylindrischen Rumpfteils 2 eine zum Körperinneren gewölbte innere Bodenkante 13, die anschliessend in eine etwa 45 Grad Schräge 25 übergeht. Die Schräge 25 wird als eine Freimachung für den Übergang zwischen den verschiedenen Durchmessern bereitgestellt.

Figuren 2A und 2B zeigen das zylindrische Rumpfteil 2 im nicht montierten Zustand, wobei die Anordnungen der Einfräsungen 7 symmetrisch zur Mittelachse der quadratischen Öffnung 26 verlaufen, die für das Durchstecken der Finger 4 des kappenähnlichen Teils 3 bereitgestellt ist.

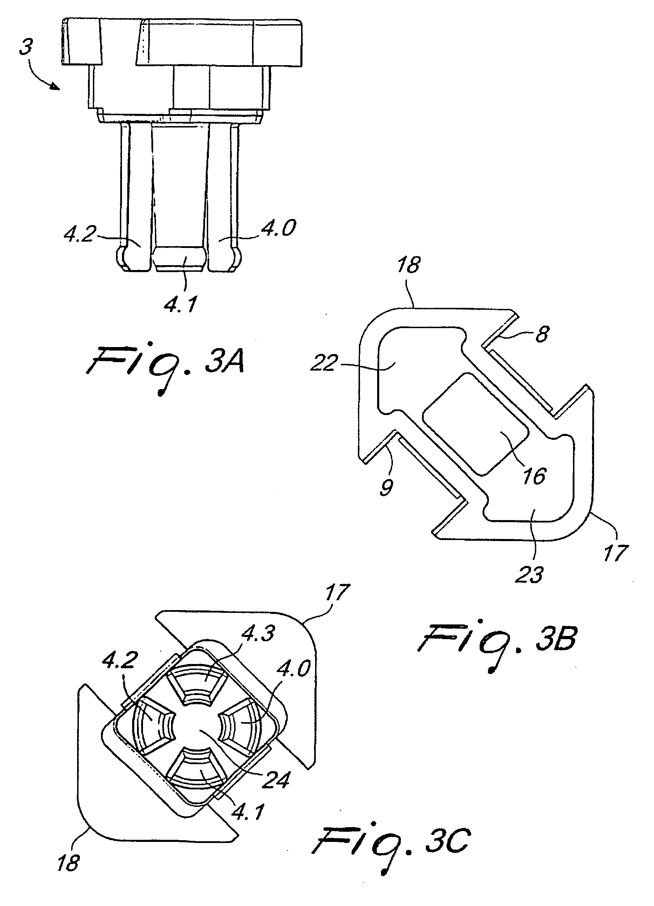

Die Figuren 3A bis 3C zeigen das kappenförmige Teil 3 im nicht montierten Zustand, wobei die Vielzahl der Finger 4, die aus einem elastischen Material hergestellt sind und im Bereich der Mittelachse bei Druckausübung, z. B. beim Einpressen in ein Abutment 21, einen Adapter (nicht gezeigt) oder dergleichen, zu der Mittelachse hin abgebogen werden können und somit eine Spannung im Material erzeugen, die vorteilhaft zur Fixierung an einem Körper genutzt werden kann.

Der Durchmesser der einzelnen Finger 4 ist dabei vorteilhaft im Stegbereich 6 größer als an dem Bereich der Spitze des Fingers 4, was somit einerseits eine hohe Steife im Stegbereich 6 erzeugt und gleichermaßen das zylinderförmige Rumpfteil an das Abutment anpresst.

In dem Bereich, der von den radial angeordneten Fingern 4 umschlossen wird, bildet sich ein teilweise unterbrochener freiliegender, ringförmiger Bereich 24 aus, der somit einen Freiraum bildet, der somit bei Druckausübung, z. B. beim Einsetzen des kappenförmigen Teils 3 durch das zylindrische Rumpfteil 2 hindurch, auf die Finger 4 genügend Spiel lässt, um eine Schnappverbindung mit einer dazu vorgesehenen Nut 19 im inneren Bereich eines Abutments 21 oder Technikeradapters zu ermöglichen.

An einem Ende, das den unteren Bereich des Fingers 4 bildet, ist an jedem der Finger 4 ein nach aussen hervortretender Bereich, eine Wölbung 27, vorhanden, die zum Eingriff in z.B. eine entsprechende Nut 19 an einem Abutment 21 oder einem nicht dargestellten Technikeradapter geeignet ist. In einer bevorzugten Ausführungsform ist diese als eine nach aussen gewölbte, halbkreisförmige Fläche ausgebildet. Dies kann je nach den Anforderungen an individuelle Abutments in unterschiedlichen Formen ausgebildet sein.

Am anderen Ende des Fingers 4 schliesst sich ein Kopf 5 des kappenförmigen Teils 3 mit einem im Wesentlichen quadratischen Hohlraum 16 an, der an seiner Aussenfläche in dem Bereich, der bei der Montage mit dem zylindrischen Rumpfteil 2 in Eingriff steht, den stufenförmigen Bereich 14 aufweist. Dieser stufenförmige Bereich 14 kann, wie erwähnt, vorteilhaft mit einem Adhäsionsmittel, wie z.B. Klebstoff, versehen werden, um der Abformkappe 1 zusätzliche Stabilität und Festigkeit zu verleihen.

An zwei gegenüberliegenden Seiten des quadratischen Hohlraums 16 befinden sich rechteckige Aussparungen 8, 9, die breiter als die entsprechenden Seiten des quadratischen Hohlraums 16 sind. An den zwei anderen Seiten des quadratischen Hohlraums 16 befinden sich benachbarte dreieckförmige Bereiche 22, 23, wobei die Spitzen 17, 18 des Dreiecks abgerundet sind. Die Stirnfläche des kappenähnlichen Teils 3 bildet somit eine Doppelpfeil-ähnliche Struktur. Die Doppelpfeil-ähnliche Struktur bewirkt, dass beim Abziehen der Abdruckform, eine Retention der zwischen der im Stegbereich 6 des kappenähnlichen Teils 3 und des zylindrischen Rumpfteils 2 eingeflossenen Formmasse zur Folge hat und damit ein Verdrehen der Abformkappe 1 verhindert.

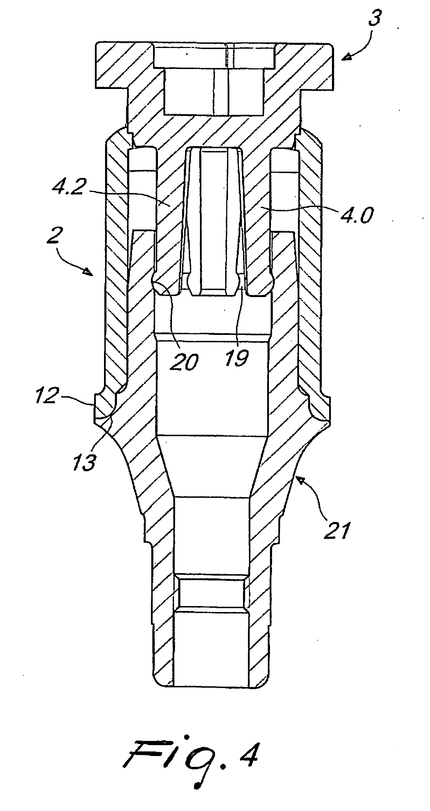

Fig. 4 zeigt eine auf einem Abutment 21 oder einem hier nicht dargestellten Technikeradapter montierte zweiteilige Abformkappe 1, wobei das zylindrische Rumpfteil 2 zusammen mit dem aufgesetzten kappenförmigen Teil 3 mittels einer Schnappverbindung am Abutment 21 fixiert ist. Das kappenförmige Teil 3 greift dabei durch die quadratische Öffnung 26 des zylindrischen Rumpfteils 2 mit dem Bereich der Finger 4 ein und schnappt in die Nut 19 an der Innenfläche des Abutments 21 ein. Die Nut 19 ist in der bevorzugten Ausführungsform ringförmig ausgebildet und ist weiterhin an der Kontaktfläche 20, wo die Wölbung 27 und Abutment 21 ineinander schnappen, vorteilhaft halbkreisförmig ausgebildet.

Die Spannung, die sich beim Eindrücken der Finger 4 in den Innenbereich des Abutments 21 im Material der Finger aufbaut, sorgt für einen formschlüssigen Andruck der gewölbten inneren Bodenkante 13 im Kragenbereich des Abutments 21 und stabilisiert gleichzeitig den oberen Bereich der Abformkappe gegen Dreh- oder Kippbewegungen, da das Einschnappen der Finger 4 in die Nut 19 des Abutments 21 zusätzlich Spannung auf die Kontaktfläche 20 der ringförmigen Nut 19 ausübt.

Obwohl die Erfindung in der bevorzugten Ausführungsform mit vier Fingern am kappenähnlichen Teil versehen ist, ist für den einschlägig versierten Fachmann ohne weiteres verständlich, dass dieselben Vorteile auch bei unterschiedlicher Anzahl der Finger vorliegen, wobei in der Praxis auch gute Ergebnisse mit drei, fünf oder mehr Fingern erzielt wurden. In der Tat kann, wie für den versierten Fachmann verständlich, die Anzahl der Finger variiert werden, solange eine stabile Anbringung des kappenförmigen Teils 3 am Abutment 21 gewährleistet werden kann.

Da das kappenförmige Teil 3 vorteilhaft separat mithilfe einer Schnappverbindung in das zylindrische Rumpfteil 2 einsetzbar ist, kann ein Austausch des kappenförmigen Teils 3 oder des zylindrischen Rumpfteils 2 zur individuellen Anpassung an spezielle Abutments 21 oder Technikeradapter ohne Hilfsmittel oder Verwendung spezieller Werkzeuge, z.B. Schraubendreher schnell und einfach durchgeführt werden.

Wenn in irgendeinem der Ansprüche erwähnte technische Merlanale mit einem Bezugszeichen versehen sind, wurden diese Bezugszeichen lediglich eingeschlossen, um die Verständlichkeit der Ansprüche zu erhöhen. Entsprechend haben diese Bezugszeichen keine einschränkende Auswirkung auf den Schutzumfang eines jeden Elements, das exemplarisch durch solche Bezugszeichen bezeichnet wird.

### Bezugszeichenliste:

1) Abformkappe
2) zylindrisches Rumpfteil
3) kappenförmiges Teil
4) (4.0-4.3) Finger
5) Kopf
6) Stegbereich
7) (7.0-7.3) Einfräsungen
8) (1.) rechteckige Aussparung
9) (2.) rechteckige Aussparung
10) (1.) Erhebung
11) (2.) Erhebung
12) zylindrischer Bereich
13) gewölbte innere Bodenkante
14) stufenförmiger Bereich
15) halbkreisförmiger Absatz
16) quadratischer Hohlraum
17) (1.) Spitze
18) (2.) Spitze
19) Nut
20) Kontaktfläche
21) Abutment
22) (1.) dreieckförmiger Bereich
23) (2.) dreieckförmiger Bereich
24) ringförmiger Bereich
25) Schräge
26) quadratische Öffnung
27) Wölbung

## Patentansprüche

1. Zweiteilige Abformkappe (1) für die Erstellung eines Modells für ein Dentalimplantat, die folgendes umfasst:
ein zylindrisches Rumpfteil (2), und
ein auf das zylindrische Rumpfteil (2) aufsteckbares kappenförmiges Teil (3),
wobei das zylindrische Rumpfteil (2) und das kappenförmige Teil (3) eine gemeinsame Mittelachse haben,
wobei das kappenförmige Teil (3) mit sich in Richtung der Mittelachse erstreckenden elastischen Mitteln (4) ausgestattet ist, die ausgebildet sind, um zur Mittelachse hin abgebogen zu werden und somit eine Spannung in den elastischen Mitteln (4) erzeugen, um in eine Nut (19) im inneren eines Abutments (21), Adapters oder dergleichen eingreifen zu können, und wobei
das zylindrische Rumpfteil (2) ausgebildet ist, um eng am Äußeren des Abutments (21), Adapters oder dergleichen anliegen zu können, wobei
das kappenförmige Teil (3) einen Stegbereich (6) besitzt, der im montierten Zustand an seiner unteren Seite an einem stufenförmigen Bereich (14) des zylindrischen Rumpfteils (2) anliegt.

2. Zweiteilige Abformkappe (1) nach Anspruch 1, **dadurch gekennzeichnet, dass** die elastischen Mittel (4) in Form von radial angeordneten Fingern (4) ausgeführt sind.

3. Zweiteilige Abformkappe (1) nach Anspruch 1 oder 2, **dadurch gekennzeichnet, dass** die elastischen Mittel (4) in gleichen Abständen um die Mittelachse zueinander angeordnet sind.

4. Zweiteilige Abformkappe (1) gemäß einem der mehreren vorangehenden Ansprüche, **dadurch gekennzeichnet, dass** die elastischen Mittel (4) mit jeweiligen Wölbungen (27) in Höhe einer jeweiligen Nut (21) ausgestattet sind.

5. Zweiteilige Abformkappe (1) gemäß einem der mehreren vorangehenden Ansprüche, **dadurch gekennzeichnet, dass** das zylindrische Rumpfteil (2) an seinem apikalen Bereich mit einer Bodenkante (13) ausgebildet ist, die einen formschlüssigen Andruck auf den Kragenbereich des Abutments (21), Adapters oder dergleichen ausüben kann.

6. Zweiteilige Abformkappe (1) gemäß einem der mehreren vorangehenden Ansprüche, **dadurch gekennzeichnet, dass** das zylindrische Rumpfteil (2) mit aussen liegenden Einfräsungen (7) bereitgestellt ist.

7. Zweiteilige Abformkappe (1) gemäß einem der mehreren vorangehenden Ansprüche, **dadurch gekennzeichnet, dass** das kappenförmige Teil (3) mit mindestens zwei Aussparungen (8, 9) ausgebildet ist..

8. Zweiteilige Abformkappe (1) gemäß einem der mehreren vorangehenden Ansprüche, **dadurch gekennzeichnet, dass** das zylindrische Rumpfteil (2) an der dem kappenförmigen Teil (3) zugewandten Fläche mit mindestens zwei Erhebungen (10, 11) ausgebildet ist.

9. Zweiteilige Abformkappe (1) nach Anspruch 7 und 8, **dadurch gekennzeichnet, dass** die zwei Erhebungen (10, 11) in die Aussparungen (8, 9) hineinragen.

10. Zweiteilige Abformkappe (1) gemäß einem der mehreren vorangehenden Ansprüche, **dadurch gekennzeichnet, dass** die Stirnfläche des kappenförmigen Teils (3) mit mindestens zwei gegenüberliegenden dreieckförmigen Bereichen (22, 23) bereitgestellt ist.

11. Zweiteilige Abformkappe (1) nach einem der mehreren vorangehenden Ansprüche, **dadurch gekennzeichnet, dass** zwischen den radial angeordneten Mitteln (4) ein teilweise unterbrochener freiliegender, ringförmiger Bereich (24) ausgebildet ist.

12. Zweiteilige Abformkappe (1) nach einem der mehreren vorangehenden Ansprüche, **dadurch gekennzeichnet, dass** die Mittel (4) in axialer Richtung etwa 50-70% in das Innere des zylindrischen Rumpfteils (2) hineinragen.

13. Kombination aus einem Abutment (21), Adapter oder dergleichen mit einer zweiteiligen Abformkappe (1) nach einem oder mehreren der vorangehenden Ansprüche, **dadurch gekennzeichnet, dass** die Nut (19) ringförmig ausgebildet ist.

14. Kombination nach Anspruch 13, **dadurch gekennzeichnet, dass** die Bodenkante (13) nach innen gewölbt ist und dass die Bodenkante (13) in eine Schräge (25) übergeht, die im Kragenbereich des Abutments (21) liegen kann.

## Claims

1. Two-part impression cap (1) for creating a model for a dental implant, comprising:
a cylindrical trunk part (2) and
a cap-shaped part (3) which can be plugged onto the cylindrical trunk part (2),
wherein the cylindrical trunk part (2) and the cap-shaped part (3) have a common center axis,
wherein the cap-shaped part (3)is provided with elastic means (4) extending in the direction of the center axis which are adapted for being bent toward the center axis and thus producing a tension in the elastic means (4) for being able to engage a groove (19) in the interior of an abutment (21), adapter or the like, and wherein
the cylindrical trunk part (2) is adapted to fit tightly on the exterior of the abutment (21), adapter or the like, wherein
the cap-shaped part (3) has a web portion (6) whose lower side, in the assembled state, abuts against a step-shaped portion (14) of the cylindrical trunk part (2).

2. Two-part impression cap (1) according to Claim 1, **characterized in that** the elastic means (4) are embodied in the form of radially arranged fingers (4).

3. Two-part impression cap (1) according to Claim 1 or 2, **characterized in that** the elastic means (4) are arranged at equal distances from each other around the center axis.

4. Two-part impression cap (1) according to one of the several preceding claims, **characterized in that** the elastic means (4) are provided with corresponding arcs (27) at the height of a respective groove (21).

5. Two-part impression cap (1) according to one of the several preceding claims, **characterized in that** the cylindrical trunk part (2) is provided at its apical portion with a bottom edge (13) which can apply a positive pressure on the collar portion of the abutment (21), adapter or the like.

6. Two-part impression cap (1) according to one of the several preceding claims, **characterized in that** the cylindrical trunk part (2) is provided with exterior milled slots (7).

7. Two-part impression cap (1) according to one of the several preceding claims, **characterized in that** the cap-shaped part (3) is provided with at least two recesses (8, 9).

8. Two-part impression cap (1) according to one of the several preceding claims, **characterized in that** the face of the cylindrical trunk part (2) which is directed toward the cap-shaped part (3) is provided with at least two protrusions (10, 11).

9. Two-part impression cap (1) according to Claims 7 and 8, **characterized in that** the two protrusions (10, 11) protrude into the recesses (8, 9).

10. Two-part impression cap (1) according to one of the several preceding claims, **characterized in that** the end face of the cap-shaped part (3) is provided with at least two opposite triangular portions (22, 23).

11. Two-part impression cap (1) according to one of the several preceding claims, **characterized in that** a partly discontinuous, exposed, annular portion (24) is formed between the radially arranged means (4).

12. Two-part impression cap (1) according to one of the several preceding claims, **characterized in that** the means (4) protrude by approximately 50-70% into the interior of the cylindrical trunk part (2) in the axial direction.

13. Combination of an abutment (21), adapter or the like with a two-part impression cap (1) according to one or more of the preceding claims, **characterized in that** the groove (19) has an annular shape.

14. Combination according to Claim 13, **characterized in that** the bottom edge (13) is arched inwardly and **in that** the bottom edge (13) transitions into a skew (25) which can lie within the collar portion of the abutment (21).

## Revendications

1. Cupule d'empreinte (1) en deux parties pour la réalisation d'un modèle pour un implant dentaire, laquelle comporte les éléments suivants :
un corps cylindrique (2), et
une partie (3) en forme de coiffe apte à être enfichée dans le corps cylindrique (2),
le corps cylindrique (2) et la partie (3) en forme de coiffe ayant un axe médian commun,
la partie (3) en forme de coiffe étant munie de moyens (4) élastiques, qui s'étendent dans la direction de l'axe médian et qui sont conçus pour être pliés vers l'axe médian et pour générer ainsi une tension dans les moyens (4) élastiques pour pouvoir s'engager dans une gorge (19) à l'intérieur d'un pilier (21), d'un adaptateur ou élément similaire, et
le corps cylindrique (2) étant réalisé pour pouvoir venir en appui étroitement sur la face extérieure du pilier (21), adaptateur ou élément similaire,
la partie (3) en forme de coiffe comportant une zone de talon (6) qui, dans la position montée, est en appui avec sa face inférieure sur une zone d'épaulement (14) du corps cylindrique (2).

2. Cupule d'empreinte (1) en deux parties selon la revendication 1, **caractérisée en ce que** les moyens (4) élastiques sont conçus sous forme de doigts (4) agencés radialement.

3. Cupule d'empreinte (1) en deux parties selon la revendication 1 ou 2, **caractérisée en ce que** les moyens (4) élastiques sont agencés à distance égale les uns des autres.autour de l'axe médian.

4. Cupule d'empreinte (1) en deux parties selon l'une quelconque des revendications précédentes, **caractérisée en ce que** les moyens (4) élastiques sont munis de bossages (27) respectifs à hauteur d'une gorge (21) respective.

5. Cupule d'empreinte (1) en deux parties selon l'une quelconque des revendications précédentes, **caractérisée en ce que** le corps cylindrique (2) comporte, dans sa zone apicale, une arête inférieure (13), qui peut exercer une pression par conjugaison de formes sur la zone de collet du pilier (21), adaptateur ou élément similaire.

6. Cupule d'empreinte (1) en deux parties selon l'une quelconque des revendications précédentes, **caractérisée en ce que** le corps cylindrique (2) est mis à disposition avec des fraisages (7) situés à l'extérieur.

7. Cupule d'empreinte (1) en deux parties selon l'une quelconque des revendications précédentes, **caractérisée en ce que** la partie (3) en forme de coiffe comporte au moins deux évidements (8, 9).

8. Cupule d'empreinte (1) en deux parties selon l'une quelconque des revendications précédentes, **caractérisée en ce que** le corps cylindrique (2) comporte au moins deux saillies (10, 11) sur la surface orientée vers la partie (3) en forme de coiffe.

9. Cupule d'empreinte (1) en deux parties selon les revendications 7 et 8, **caractérisée en ce que** les deux saillies (10, 11) s'engagent dans les évidements (8, 9).

10. Cupule d'empreinte (1) en deux parties selon l'une quelconque des revendications précédentes, **caractérisée en ce que** la surface frontale de la partie (3) en forme de coiffe est mise à disposition avec au moins deux zones triangulaires (22, 23) opposées.

11. Cupule d'empreinte (1) en deux parties selon l'une quelconque des revendications précédentes, **caractérisée en ce qu'**une zone annulaire (24) dégagée, partiellement interrompue, est réalisée entre les moyens (4) agencés radialement.

12. Cupule d'empreinte (1) en deux parties selon l'une quelconque des revendications précédentes, **caractérisée en ce que** les moyens (4) s'engagent dans la direction axiale sur environ 50 à 70% à l'intérieur du corps cylindrique (2).

13. Combinaison formée par un pilier (21), adaptateur ou élément similaire avec une cupule d'empreinte (1) en deux parties selon une ou plusieurs des revendications précédentes, **caractérisée en ce que** la gorge (19) présente une forme annulaire.

14. Combinaison selon la revendication 13, **caractérisée en ce que** l'arête inférieure (13) est courbée vers l'intérieur et **en ce que** l'arête inférieure (13) se prolonge par un chanfrein (25), qui peut être situé dans la zone de collet du pilier (21).
